Europäisches Patentamt

European Patent Office

Office européen des brevets

(11) Veröffentlichungsnummer: **0 077 435**
**B1**

(12) **EUROPÄISCHE PATENTSCHRIFT**

(45) Veröffentlichungstag der Patentschrift:
29.01.86

(21) Anmeldenummer: 82105815.3

(22) Anmeldetag: 30.06.82

(51) Int. Cl.⁴: **F 02 B 75/06**

(54) **Kurbeltrieb für eine Brennkraftmaschine.**

(30) Priorität: 15.10.81 DE 3140951

(43) Veröffentlichungstag der Anmeldung:
27.04.83 Patentblatt 83/17

(45) Bekanntmachung des Hinweises auf die Patenterteilung:
29.01.86 Patentblatt 86/5

(84) Benannte Vertragsstaaten:
DE FR GB IT

(56) Entgegenhaltungen:
GB - A - 522 554
GB - A - 2 061 449
US - A - 4 262 548

Dubbel Taschenbuch für den Maschinenbau, 13.
Auflage, Springer Verlag 1974, Seite 274 und 295

(73) Patentinhaber: **Dr.Ing.h.c. F. Porsche
Aktiengesellschaft, Porschestrasse 42,
D-7000 Stuttgart 40 (DE)**

(72) Erfinder: **Ziegler, Gerhard, Dipl.-Ing., Goethestrasse 18,
D-7122 Besigheim 3 (DE)**

**Beschreibung**

Die Erfindung betrifft einen Kurbelbetrieb für eine Brennkraftmaschine, insbesondere vierzylindriger Bauart, der ein als Schwungrad wirkendes Bauteil aufweist, das mit der Kurbelwelle verbunden ist.

Brennkraftmaschinen der eingangs genannten Bauart haben in der Kröpfungsebene und in der zu dieser senkrecht verlaufenden Normalebene der Kurbelwelle verschiedene Massen und Steifigkeitsverteilungen. Daraus resultieren bei korrespondierenden Biegeschwingungsformen unterschiedliche Resonanzfrequenzen, wobei die Resonanzfrequenzen der Kröpfungsebene grundsätzlich tiefer und damit ungünstiger liegen.

Die bei diesen Resonanzfrequenzen auftretenden Schwingungsformen werden durch unvermeidliche Gas- und Massenkräfte angeregt und können zu Kurbelwellenbrüchen führen oder zumindest die Ursache für Motorgeräuschüberhöhungen sein.

Es ist bekannt (Dubbel, Taschenbuch für den Maschinenbau, 13. Auflage, S. 295), zur Vermeidung von Resonanzen die Eigenschwingungszahl zu verlegen und zwar beispielsweise durch Verkleinern oder Vergrössern von Wellendurchmessern.

Diese Massnahme vermag jedoch nicht dazu beizutragen, um Biegeschwingungen, die beim Betrieb einer Vierzylinder-Reihenbrennkraftmaschine auftreten, zu minimieren.

Aufgabe der Erfindung ist es, am Kurbeltrieb einer Brennkraftmaschine solche Vorkehrungen zu treffen, dass die auftretenden Biegeschwingungen zumindest minimiert werden.

Erfindungsgemäss wird diese Aufgabe durch die kennzeichnenden Merkmale des Anspruches 1 gelöst. Weitere, die Erfindung in vorteilhafter Weise ausgestaltende Merkmale sind in den nachfolgenden Ansprüchen enthalten.

Die mit der Erfindung hauptsächlich erzielten Vorteile sind darin zu sehen, dass die rotationsasymmetrische Verteilung der schwingenden Massen z. B. am Schwungrad eine Verschiebung der tieferen Resonanzfrequenz nach oben bewirkt, und zwar in der Kröpfungsebene der Kurbelwelle, wogegen die Resonanzfrequenz in der Normalebene der Kurbelwelle abgesenkt wird. Durch Anhebungen der tieferen Resonanzfrequenz ist die Verschiebung einer kritischen Resonanzüberhöhung – letztere kann zu einem Kurbelwellenbruch führen – möglich und zwar so, dass eine Anregung dieser Resonanz im nutzbaren Drehzahlbereich (Leerlauf bis Höchstdrehzahl) vermieden wird. Die asymmetrische Verteilung am Schwungrad lässt sich auf einfache Weise verwirklichen, z. B. durch Ausnehmungen in der Kröpfungsebene bzw. Erweiterungen in der Normalebene. Ist das Schwungrad gleichzeitig Bestandteil einer Kupplung, so kann die bereichsweise vorgenommene Schwungraderleichterung durch eine der Kurbelwelle zugeordnete Ausnehmung am Rand des Schwungrades erfolgen, die sich ringartig entlang von diesem erstreckt. Selbstverständlich können entsprechende Massnahmen an anderen mit dem Kurbeltrieb verbundenen Bauteilen wie Riemenscheibe, Kupplung oder dergleichen, vorgenommen werden.

In der Zeichnung sind Ausführungsbeispiele der Erfindung dargestellt, die nachstehend näher beschrieben werden. Es zeigt:

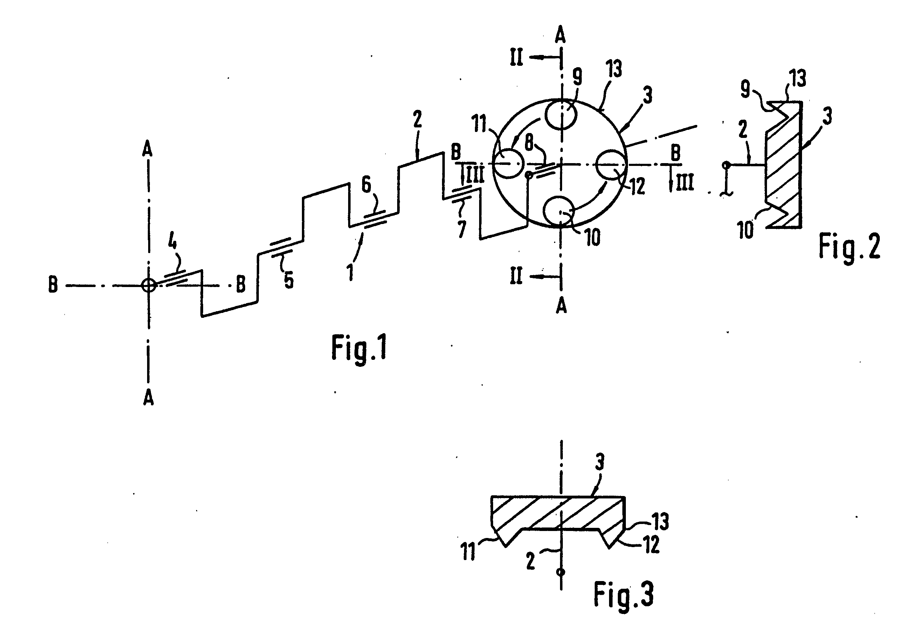

Fig. 1 eine prinzipielle Schrägansicht eines Kurbeltriebes einer Brennkraftmaschine;

Fig. 2 einen Schnitt nach der Linie II–II der Fig. 1;

Fig. 3 einen Schnitt nach der Linie III–III der Fig. 1;

Fig. 4 eine Teilansicht der Fig. 1 einer weiteren Ausführungsform;

Fig. 5 einen Schnitt nach der Linie V–V der Fig. 4.

Ein Kurbeltrieb 1 einer nicht näher gezeigten Brennkraftmaschine – Vierzylinder in Reihe – umfasst eine Kurbelwelle 2 und ein Schwungrad 3. Die Kurbelwelle 2 ist fünffach gelagert, wofür Lager 4, 5, 6, 7, 8 dienen.

Das Schwungrad 3 wird durch eine kreiszylindrische Scheibe gebildet und ist fest mit der Kurbelwelle 2 verbunden. Zur Minimierung der beim Betrieb der Brennkraftmaschine auftretenden Schwingungen sind in der Kröpfungsebene A–A der Kurbelwelle 2 am Schwungrad 3 Ausnehmungen 9, 10 vorgesehen. Ausserdem sind zur Erhaltung des polaren Trägheitsmomentes in der Normalebene B–B der Kurbelwelle 2 am Schwungrad 3 Erweiterungen 11, 12 angebracht. Die Normalebene B–B verläuft senkrecht zur Kröpfungsebene A–A.

Die Ausnehmungen 9, 10 und Erweiterungen 11, 12 sind benachbart einem äusseren Rand 13 des Schwungrades 3 angeordnet. Das Gewicht, das durch die Ausnehmungen 9, 10 erzielt wird, entspricht in etwa dem der Erweiterungen 11, 12. Auch ist die Lage dieser Ausnehmungen und Erweiterungen an gegenüberliegenden Seiten der Kröpfungsebene A–A bzw. der Normalebene B–B gleich. Ferner stimmen die Querschnittsformen der Ausnehmungen bzw. der Erweiterungen überein, die im Ausführungsbeispiel kegelig sind. Selbstverständlich sind auch andere Querschnittsformen denkbar.

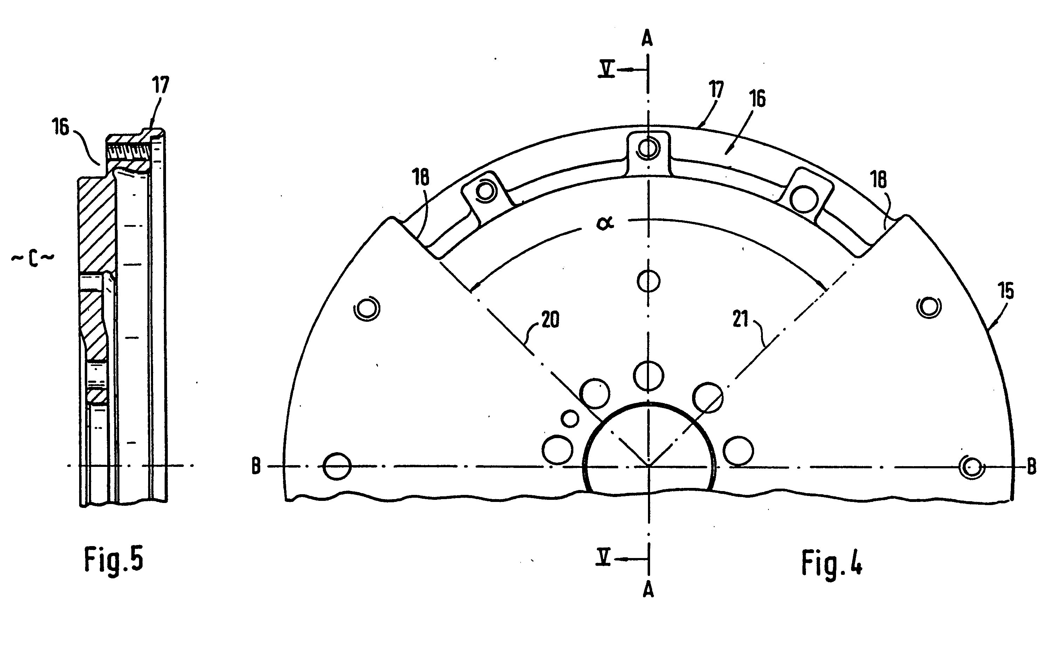

Gemäss Fig. 4 ist ein Schwungrad 15 gleichzeitig Bestandteil einer nicht gezeigten Reibungskupplung. Die Verkleinerung der schwingenden Masse des Schwungrades 15 wird durch eine Ausnehmung 16 gebildet, die an der der Kurbelwelle 2 zugekehrten Seite C ringartig entlang eines äusseren Randes 17 des Schwungrades 15 verläuft. Sie wird begrenzt von Wandungen 18, 19, die auf Hilfslinien 20, 21 eines Kreisausschnittes liegen. Der Winkel α der Hilfslinien beträgt 90°, wobei die Kröpfungsebene A–A als Winkelhalbierende verläuft. Der Querschnitt der Ausnehmung 16 ist winkelförmig. Es besteht auch die Möglichkeit, eine andere Querschnittsform zu wählen.

Das Schwungrad 15 ist so ausgebildet, dass das in der Kröpfungsebene A–A durch die Ausnehmung 16 weggenommene Gewicht beidseitig der Normalebene B–B angesetzt ist.

## Patentansprüche

1. Kurbeltrieb für eine Brennkraftmaschine, insbesondere vierzylindriger Bauart, der ein als Schwungrad wirkendes Bauteil aufweist, das mit einer Kurbelwelle (2) verbunden ist, dadurch gekennzeichnet, dass die die Kurbeltriebresonanzen beeinflussenden Massen des als Schwungrad wirkenden Bauteils in der Kröpfungsebene (A–A) der Kurbelwelle (2) kleiner sind als in der Normalebene (B–B), dass zur Verkleinerung der schwingenden Massen in der Kröpfungsebene (A–A) das genannte Bauteil Ausnehmungen (9, 10) aufweist, wobei zur Erhaltung des polaren Trägheitsmoments in der Normalebene (B–B) am genannten Bauteil Erweiterungen (11, 12) vorgesehen sind und dass sowohl die Ausnehmungen (9, 10) wie auch die Erweiterungen (11, 12) gegenüberliegend angeordnet sind.

2. Kurbeltrieb nach Anspruch 1, dadurch gekennzeichnet, dass die Ausnehmungen (9, 10) und die Erweiterungen benachbart dem äusseren Rand (13) des Schwungrades (2) angeordnet sind.

3. Kurbeltrieb, insbesondere nach Anspruch 1, mit einem Schwungrad, das Bestandteil einer Reibungskupplung ist, dadurch gekennzeichnet, dass die Verkleinerung der schwingenden Masse durch eine ringartig entlang des äusseren Randes (17) des Schwungrades (15) verlaufenden Ausnehmung (16) gebildet wird, die an der der Kurbelwelle (2) zugewandten Seite (C) angebracht sind.

## Claims

1. A crank mechanism for an internal combustion engine, in particular of four-cylinder design, comprising a component which acts as a flywheel and which is connected to a crankshaft (2), characterized in that the masses – affecting the resonances of the crank mechanism – of the component acting as a flywheel are smaller in the crank plane (A–A) of the crankshaft (2) than in the normal plane (B–B), the said component has recesses (9, 10) in order to reduce the vibrating masses in the crank plane (A–A), projections (11, 12) being provided in order to maintain the polar moment of inertia in the normal plane (B–B) on the said component, and both the recesses (9, 10) and the projections (11, 12) are arranged opposite [one another].

2. A crank mechanism according to claim 1, characterized in that the recesses (9, 10) and the projections are arranged adjacent to the outer edge (13) of the flywheel (2).

3. A crank mechanism, in particular according to claim 1, having a flywheel which is a component of a friction clutch, characterized in that the reduction in the vibrating mass is produced by a recess (16) extending in an annular manner along the outer edge (17) of the flywheel (15) and which [is] provided on the side (C) facing the crankshaft (2).

## Revendications

1. Mécanisme à bielle et manivelle pour moteur à combustion interne, notamment du type à quatre cylindres, comportant un composant jouant le rôle volant, relié à un vilebrequin (2), caractérisé en ce que les masses du composant jouant le rôle de volant, ayant un effet sur les résonances du mécanisme à bielle et manivelle, sont plus faibles dans le plan du vilebrequin (A–A) du vilebrequin (2) que dans le plan normal (2), en ce que, pour réduire les masses oscillantes dans le plan du vilebrequin (A–A), ledit composant comporte des évidements (9, 10), des saillies (11, 12) étant prévus sur ledit composant pour conserver le moment d'inertie polaire dans le plan normal (B–B), et n ce que les évidements (9, 10) tout comme les saillies (11, 12) sont disposés en opposition.

2. Mécanisme à bielle et manivelle selon la revendication 1, caractérisé en ce que les évidements (9, 10) et les saillies se trouvent au voisinage du bord extérieur (13) du volant (2).

3. Mécanisme à bielle et manivelle selon la revendication 1, comportant un volant d'inertie faisant partie d'un embrayage à friction, caractérisé en ce que la réduction de la masse oscillante est due à un évidement (16) longeant annulairement le bord extérieur (17) du volant (15), se trouvant sur la face (C) située du côté du vilebrequin (2).

Fig.1

Fig.2

Fig.3

0077435

Fig.5

Fig.4

0077435